(19) Europäisches Patentamt
European Patent Office
Office européen des brevets

(11) **EP 2 197 231 A2**

(12) **EUROPEAN PATENT APPLICATION**

(43) Date of publication:
**16.06.2010 Bulletin 2010/24**

(51) Int Cl.:
*H04W 48/16* (2009.01)

(21) Application number: **09165892.2**

(22) Date of filing: **20.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **11.12.2008 KR 20080125868**

(71) Applicant: **Electronics and Telecommunications Research Institute**
**Daejeon 305-700 (KR)**

(72) Inventors:
• **Cheon, Kyung-yul**
**305-721, Daejeon (KR)**
• **Jung, Kwang Ryul**
**305-721, Daejeon (KR)**
• **Park, Ae-soon**
**305-755, Daejeon (KR)**

(74) Representative: **Betten & Resch**
**Patentanwälte**
**Theatinerstrasse 8**
**80333 München (DE)**

(54) **Carrier selection method of terminal and call connection method**

(57) Provided is a carrier selection method of a terminal. The method includes: searching a carrier through neighbor cell information received from a base station; acquiring a physical cell identity by performing downlink synchronization of the searched carrier; selecting a carrier for camping on from a cell corresponding to the acquired cell identity using original information of the terminal; and camping on the selected carrier if the selected carrier satisfies a camp on condition.

Fig. 1

Description

## CROSS-REFERENCE TO RELATED APPLICATIONS

This patent application claims priority of Korean Patent Application No. 10-2008-00125868, filed on DECEMBER 11, 2008, the entire contents of which are hereby incorporated by reference.

## BACKGROUND OF THE INVENTION

The present invention disclosed herein relates to a carrier selection method and a call connection method.

In a typical 3rd generation partnership project (3GPP) system, a base station has one carrier in each cell and a terminal is connected to the one carrier to receive diverse services. Cell selection and radio resource control (RRC) connection processes of the terminal are as follows in the typical 3GPP system.

During an initial driving or a radio environment change, a terminal searches the most suitable cell through cell selection/reselection, and camps on a cell after receiving system information from a corresponding cell, Then, when a terminal begins a call or paging is executed in a network, the terminal sets up an RRC connection through random access. That is, since only one carrier exists in one cell in the typical 3GPP system, an additional carrier selection process is not required if a cell is selected in an idle state. Additionally, if tried, it is possible to connect to a carrier during RRC connection setup.

Although a frequency of the typical 3GPP system uses a contiguous spectrum, a current international radio consultative committee radiocommunication sector (ITU-R) and 3GPP long time evolution (LTE)-advanced system is required to support a non-contiguous spectrum for data transmission at a high speed. That is, it is prescribed in the 3GPP LTE-advanced system that carrier aggregation (CA) is supported in one cell. Under these multi carrier environments, a method of effectively distributing carriers that terminals use is required in an aspect of carrier load balancing.

## SUMMARY OF THE INVENTION

The present invention provides a call connection method about unit frequency selection and allocation in an initial idle state and a connection state of a terminal that considers system load balancing under a carrier aggregation environment.

The present invention also provides a communication system capable of reducing redistribution processes of a primary carrier in a base station during call connection and also providing fast and efficient connection through call connection load balancing.

Embodiments of the present invention provide carrier selection methods of a terminal including: searching a carrier through neighbor cell information received from a base station; acquiring a physical cell identity by performing downlink synchronization of the searched carrier; selecting a carrier for camping on from a cell corresponding to the acquired cell identity using original information of the terminal; and camping on the selected carrier if the selected carrier satisfies a camp on condition.

In some embodiments, the neighbor cell information includes a physical identity of a neighbor cell, the number of carriers in a cell, and frequency information.

In other embodiments, the original information of the terminal is an international mobile station identity (IMSI).

In still other embodiments, the terminal selects a carrier using a value acquired by modulating the IMSI with the number of carriers in the cell.

In even other embodiments, the selecting of the carrier further includes determining whether the acquired cell identity is included in the received neighbor cell information or not.

In yet other embodiments, if the acquired cell identity is included in the received neighbor cell information, the terminal selects a carrier for camping on from a cell corresponding to the acquired cell identity.

In further embodiments, if the acquired cell identity is not included in the received neighbor cell information, the terminal camps on the searched carrier.

In still further embodiments, the selected carrier does not satisfy a camp on condition, the terminal camps on the searched carrier.

In even further embodiments, the terminal comps on the selected carrier using frequency information of the neighbor cell information.

In other embodiments of the present invention, call connection methods of a communication system including a base station having a plurality of carriers and a terminal connecting to at least two carriers among the plurality of carriers include: performing a primary carrier camp on operation to allow the terminal to camp on one carrier among the plurality of carriers using original information of the terminal; performing a secondary carrier camp on operation to allow the terminal to camp on one carrier among the plurality of carriers except for the primary carrier that the terminal camps on.

In some embodiments, the performing of the primary carrier camp on operation includes: searching a carrier through neighbor cell information received from the base station; acquiring a physical cell identity by performing downlink synchronization of the searched carrier; selecting a carrier for camping on from a cell corresponding to the acquired physical cell identity using original information of the terminal; and camping on the selected carrier when the selected carrier satisfies a camp on condition.

In other embodiments, the performing of the secondary carrier camp on operation includes determining a secondary carrier of the terminal by considering load for each carrier through the base station.

In still other embodiments, the base station transmits system information of the determined secondary carrier to the terminal.

In even other embodiments, if the terminal does not receive the system information of the secondary carrier, a process for receiving the system information of the secondary carrier is performed.

In yet other embodiments, if uplink synchronization about the secondary carrier is required, a random access process is performed.

## BRIEF DESCRIPTION OF THE FIGURES

The accompanying figures are included to provide a further understanding of the present invention, and are incorporated in and constitute a part of this specification. The drawings illustrate exemplary embodiments of the present invention and, together with the description, serve to explain principles of the present invention. In the figures:

FIG. 1 is a view illustrating a communication system according to an embodiment of the present invention;

FIG. 2 is a flowchart illustrating a carrier selection process of UE according to an embodiment of the present invention;

FIG. 3 is a view illustrating a call connection process in a communication system according to an embodiment of the present invention;

FIG. 4 is a flowchart illustrating a call setup processing process in a communication system according to an embodiment of the present invention;

FIG. 5 is a table illustrating a system information message according to an embodiment of the present invention;

FIG. 6 is a table illustrating a connection setup request message according to an embodiment of the present invention; and

FIG. 7 is a table illustrating a connection setup message according to an embodiment of the present invention.

## DETAILED DESCRIPTION OF PREFERRED EMBODIMENTS

Hereinafter, exemplary embodiments of the present invention will be described in detail with reference to the accompanying drawings.

A communication system of the present invention includes a terminal connected to at least two carriers in a base station that includes a plurality of carriers. Especially, a terminal of the present invention is realized to connect to one carrier of the base station based on terminal information during call connection. Therefore, the communication system reduces load of the base station during call connection.

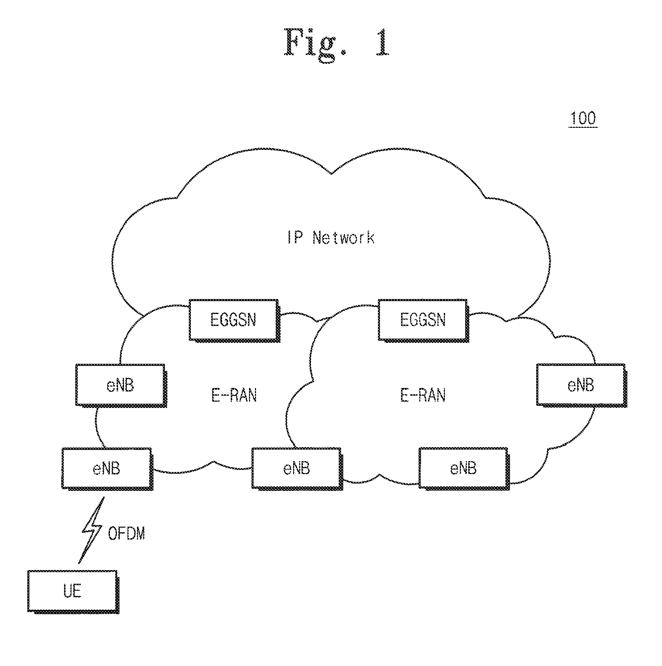

FIG. 1 is a view illustrating a communication system according to an embodiment of the present invention. As illustrated in FIG. 1, the communication system is a 3rd generation partnership project (3GPP) long time evolution (LTE)-advanced system. However, the communication system of the present invention is not necessarily limited to the 3GPP LTE-advanced system. Below, the base station is indicated with an evolved node B (eNB) and a terminal is indicated with user equipment (UE).

Referring to FIG. 1, the communication system 100 is simplified into a dual node structure of a plurality of eNBs and a plurality of upper nodes EGGSNs. The UE is connected to an internet protocol (IP) network through E-RAN.

The eNB is connected to the UE through a radio channel, The eNB performs more complex tasks. In the communication system 100, all user traffics including a real time service such as VoIP are serviced through a shared channel. This means that a device for scheduling tasks by combining situation information of the UE is required. The eNB is responsible for this scheduling. One eNB includes a plurality of cells.

In the communication system 100, hybrid ARQ (HARQ) is performed between eNB and UE. The HARQ is a technique for improving a success rate by, not destroying previously received data but soft-combining the data with retransmitted data. In a high speed packet communication such as high speed downlink packet access (HSDPA) and enhanced dedicated channel (EDCH), the HARQ is used to improve transmission efficiency, and also the communication system 100 uses the HARQ between eNB and UE.

In order to realize a transmission speed of the maximum 100 Mbps, the communication system 100 utilizes orthogonal frequency division multiplexing (OFDM) as a radio connection technique at an about 20 MHz bandwidth. Additionally, an adaptive modulation & coding method is applied to determine a modulation scheme and a channel coding rate according to a channel state of UE.

The UE wakes up at a predetermined time and observes a predetermined channel for a programmed period, and then enters into a sleep mode again. These operations are repeatedly performed. The UE is realized to connect to at least two cells of eNB.

The UE performs a cell selection/reselection process once a suitable cell is found in a radio resource control (RRC) idle state. That is, the UE acquires downlink synchronization and performs a suitable cell selection process to receive system information of a corresponding cell. However, under a carrier aggregation (CA) environment, there are a plurality of carriers such that a cell selection process includes a carrier selection process.

In a typical communication system, this cell selection process for a suitable cell is selected by UE regardless of a current load status of a base station. Under a CA environment, when a carrier is selected, a load balancing algorithm is not applied to the carrier selection process of the UE. Due to this, a typical eNB requires a load balancing function such as a call admission control for load balancing during connection establishment. This increases signal processing during UE connection and lengthens a call connection time.

On the contrary, an algorithm of load balancing is configured to be applied during the carrier selection process of UE in the communication system 100 of the present invention. Therefore, the load balancing of a base station can be performed during the carrier selection process.

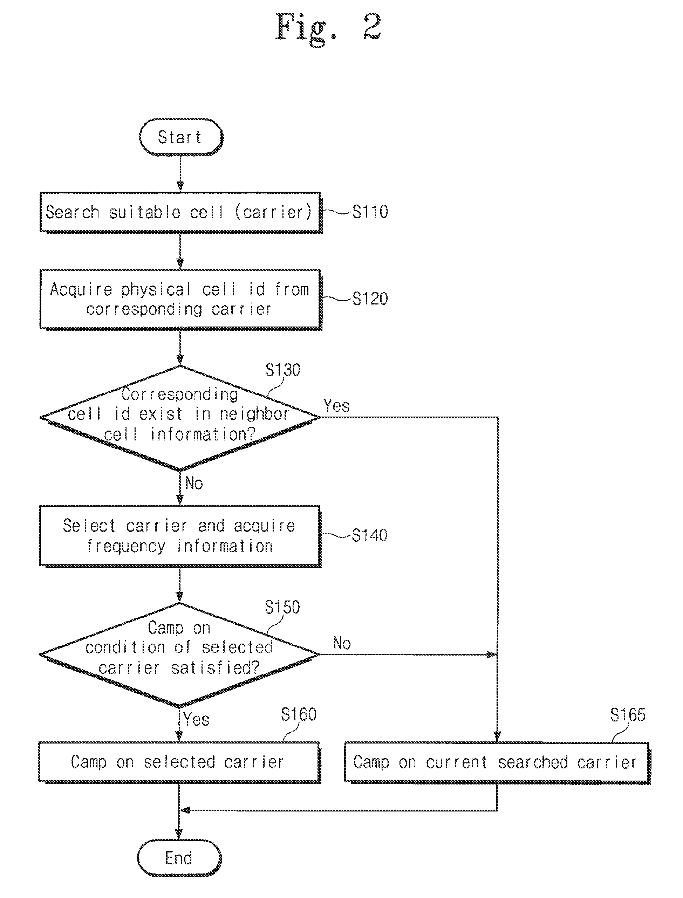

FIG. 2 is a flowchart illustrating a carrier selection process of UE according to an embodiment of the present invention. Referring to FIG. 2, the carrier selection process of UE will be progressed as follows.

First, system information transmitted from eNB includes a list about a neighbor cell. This neighbor cell information includes a physical cell ID of the neighbor cell, the number of carriers in a cell, and frequency information.

In operation S110, the UE searches a suitable cell and a carrier in a cell through neighbor cell information and radios status information acquired from the system information. In operation S120, once a suitable carrier is searched, downlink synchronization of a corresponding carrier is acquired and a physical cell ID is known. In operation S130, the UE determines whether there is a physical cell ID corresponding to the neighbor cell information or not.

If there is a physical cell ID corresponding to the neighbor cell information, the UE acquires information of the corresponding cell from the neighbor cell information through the physical cell ID, and selects a primary carrier for camping on through Equation (1).

$$S_c = \left(\sum_{k=1}^{n} k\right) \bmod N_c \qquad\qquad \ldots\ldots(1)$$

Here, $S_c$ is a selected carrier. k is a each digital value of an international mobile station identity (IMSI). $N_c$ is the number of carriers in a cell. That is, the sum of each digital value of IMSI of the UE is modulated by the number of carriers in a cell in order to select a carrier for camping on. Here, it is realized to select a carrier through the IMSI of UE. However, the UE of the present invention is not necessarily limited thereto. That is, the present invention may be realized to select a carrier through original information of UE besides the IMSI value.

Once the primary carrier is selected, the UE uses a frequency of the neighbor cell information to camp on a corresponding carrier in operation S 160.

If there is no physical cell ID corresponding to the neighbor cell information, the UE camps on the current searched carrier in operation S165. Additionally, if a radio environment of the selected carrier is less than a threshold, the UE camps on the current searched carrier.

Even if the UE of the present invention supports a plurality of carriers, it is configured to camp on only the primary carrier to receive system information during a camp on operation.

Through the above-mentioned operations, load balancing effect is acquired based on the IMSI of UE.

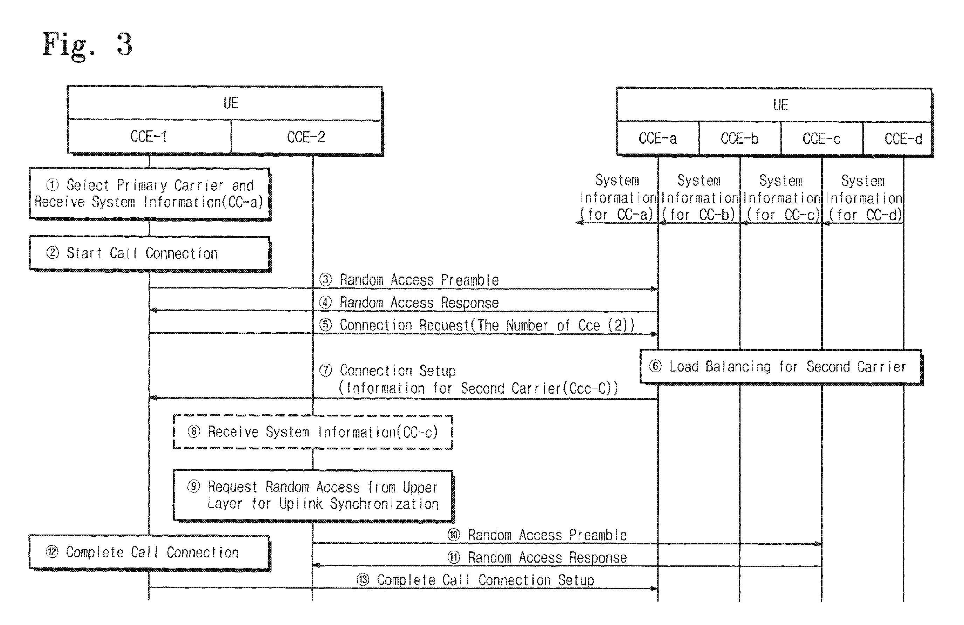

FIG. 3 is a view illustrating a call connection process in a communication system according to an embodiment of the present invention. The communication system of FIG. 3 includes eNB that is operated by four carriers CC-a, CC-b, CC-c, and CC-d, and UE that connects to two carrier devices CCE-1 and CCE-2. Here, CC represents a component carrier and CCE represent a component carrier element. Referring to FIG. 3, a call connection process of a communication system is progressed as follows.

As mentioned with reference to FIG. 2, a primary carrier is selected for UE. For convenience of description, the selected primary carrier will be designated as CC-a. Accordingly, the CC-a camps on the CCE-1 (①). At this point, the UE starts an RRC connection establishment process when call connection establishment setup is requested (②).

The UE transmits a random access preamble of the CC-a to the eNB (③). Based on the random access preamble of the UE, the eNB transmits a random access response to the UE (④).

Next, the UE adds the number of admission carriers of a terminal to a connection setup request and then transmits it to the eNB (⑤).

The cNB considers the load of each current carrier to determine a secondary carrier (⑥). For convenience of description, the CC-c is determined as the secondary carrier. The CC-c determined by eNB is transmitted into the UE (⑦). At this point, the eNB is configured to transmit system information for the CC-c to the UE.

The UE acquires downlink synchronization of the allocated CC-c. Next, if the UE does not transmit the system information, a process for receiving the system information of the CC-c is performed (⑧).

If uplink synchronization for the CC-c is necessary, the UE may perform random access processes (⑨⑩⑪).

Therefore, the call connection process of the UE is completed (⑫). If the call connection process is completed (⑫), the UE transmits a connection setup completion message to the eNB (⑬)

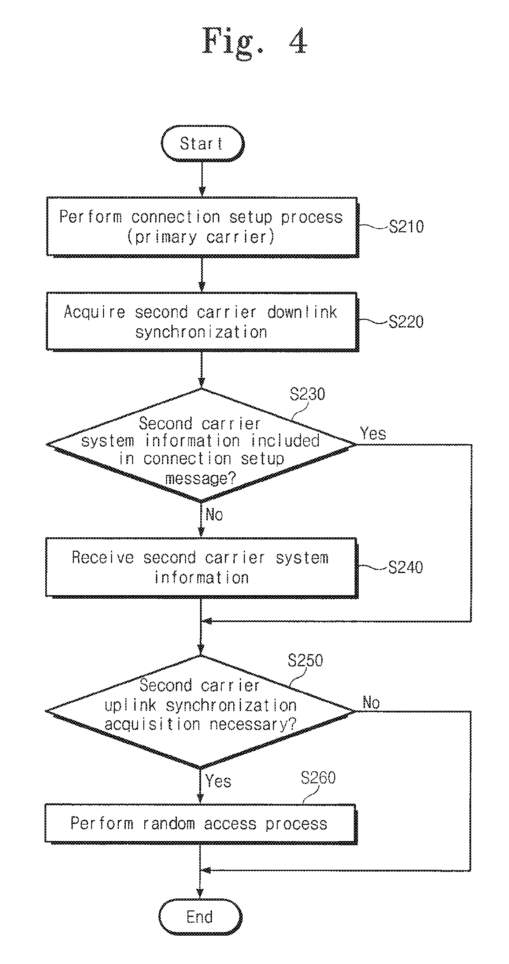

FIG. 4 is a flowchart illustrating a call setup processing process in a communication system according to an embodiment of the present invention. Referring to FIG. 4, the call setup processing process is progressed as follows.

UE performs a call setup process once a primary carrier is selected and a call setup request is inputted during a camp on state in operation S210. Next, the UE performs a process for acquiring a downlink synchronization of a secondary carrier in operation S220. At this point, the UE determines whether a connection setup message transmitted from eNB includes system information of the secondary carrier or not in operation S230.

If the connection setup message transmitted from eNB does not include system information of the secondary carrier, the UE performs an acquiring process for the system information of the secondary carrier in operation S240. Next, the UE determines whether an uplink synchronization of the secondary carrier is necessary or not in operation S250. If, the connection setup message transmitted from eNB includes system information of the secondary carrier, the UE instantly determines whether an uplink synchronization of the secondary carrier is necessary or not.

If the uplink synchronization of the secondary carrier is required, the UE performs the above-mentioned random access process in operation S260. Then, the UE completes the call setup process. If the uplink synchronization of the secondary carrier is not required, the UE completes the call set up process.

As illustrated in FIG. 4, during the carrier selection process of the UE, even if the UE has a plurality of carriers, it is efficient that the UE camps on only one carrier. Even if the UE selects a plurality of secondary carriers during a camp on process, the secondary carrier of the UE is allocated to the eNB. Accordingly, when another carrier is selected frequently, new system information needs to be received. Additionally, since system information received from a plurality of carriers may include overlapping contents, it is efficient to add only the necessary information for a secondary carrier operation to the call connection setup message.

In a case of a non-contiguous band, protocol stacks of UE and eNB may allow one MAC layer to jointly control a plurality of physical layer-1s or divide the MAC layer to control each CCE. At this point, the RRC is responsible for main control functions such as connection setup and load balancing, and also controls the call setup information processing based on each signal process.

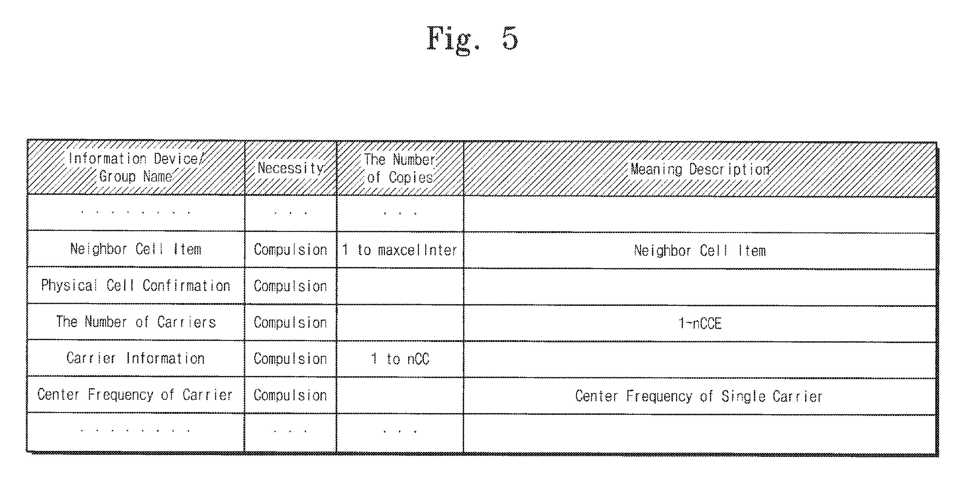

FIG. 5 is a table illustrating a system information message according to an embodiment of the present invention. Referring to FIG. 5, the system information message includes items of a neighbor cell, a physical cell ID, the number of carriers, carrier information, and a center frequency of a carrier.

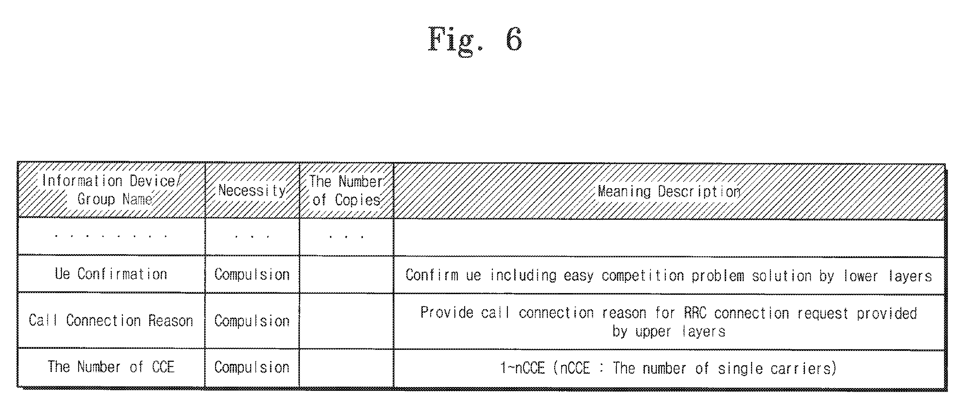

FIG. 6 is a table illustrating a connection setup request message according to an embodiment of the present invention. Referring to FIG. 6, the connection setup request message includes UE ID, connection reason, and the number of single carrier devices.

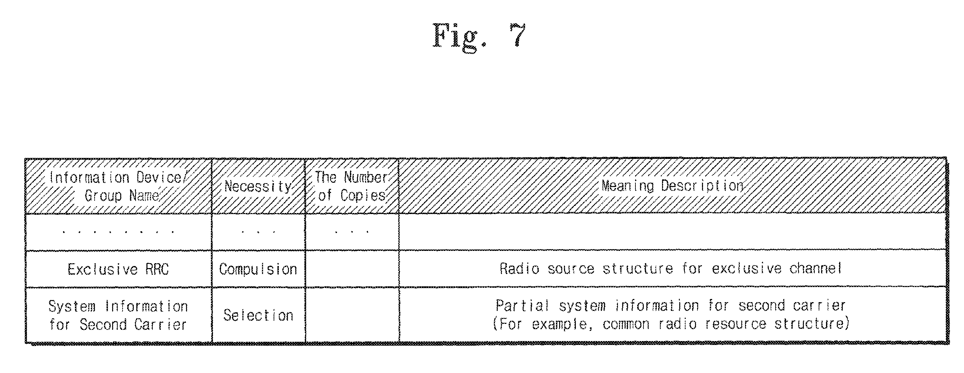

FIG. 7 is a table illustrating a connection setup message according to an embodiment of the present invention. Referring to FIG. 7, the connection setup message includes exclusive RRC and system information for a secondary carrier.

As mentioned above, the present invention provides efficient and fast connection processes in a system that operates a plurality of carrier environments. That is, a terminal considers load balancing from an initial state to select a primary carrier, such that processes for redistributing a primary carrier by a base station during a call connection are reduced. Additionally, the base station can perform load balancing of call connection through a secondary carrier allocation policy. As a result, the communication system of the present invention performs fast and efficient connection management.

A communication system of the present invention includes a terminal connected to at least two carriers in a base station including a plurality of carriers. The terminal is connected to a carrier of the base station in an idle state or a connection state through original information of the terminal.

According to an embodiment, original information of the terminal is the IMSI.

According to an embodiment, the terminal performs a primary carrier camping on operation and a secondary carrier camping on operation, and once the primary carrier camping on operation is completed, when a call setup is requested, an RRC connection setup process is performed.

According to an embodiment, the base station considers the load for each carrier to determine a secondary carrier during the secondary carrier camping on operation.

According to an embodiment, the communication system is a 3GPP-LTE advanced system.

According to the present invention, a terminal considers load balancing from an initial idle state to select a primary carrier, so that a base station reduces primary carrier redistribution processes during call connection. Moreover, due to a secondary carrier allocation policy, the base station adjusts load balancing of call connection. Therefore, a communication system of the present invention provides fast and effectively manages connections.

According to the present invention, a system that operates non-contiguous multi carrier environments provides effective and fast connection processes. That is, a terminal considers load balancing from an initial idle state to select a primary carrier, so that a base station reduces primary carrier redistribution processes during call connection.

The above-disclosed subject matter is to be considered illustrative, and not restrictive, and the appended claims are intended to cover all such modifications, enhancements, and other embodiments, which fall within the true spirit and scope of the present invention. Thus, to the maximum extent allowed by law, the scope of the present invention is to be determined by the broadest permissible interpretation of the following claims and their equivalents, and shall not be restricted or limited by the foregoing detailed description.

**Claims**

1. A carrier selection method of a terminal, the method comprising:

    searching a carrier through neighbor cell information received from a base station;
    acquiring a physical cell identity by performing downlink synchronization of the searched carrier;
    selecting a carrier for camping on from a cell corresponding to the acquired cell identity using original information of the terminal; and
    camping on the selected carrier if the selected carrier satisfies a camp on condition.

2. The method of claim 1, wherein the neighbor ceil information comprises a physical identity of a neighbor cell, the number of carriers in a cell, and frequency information.

3. The method of any of the preceding claims, wherein the original information of the terminal is an international mobile station identity (IMSI).

4. The method of claim 3, wherein the terminal selects a carrier using a value acquired by modulating the IMSI with the number of carriers in the cell.

5. The method of any of the preceding claims, wherein the selecting of the carrier further comprises determining whether the acquired cell identity is included in the received neighbor cell information or not.

6. The method of claim 5, wherein, if the acquired cell identity is included in the received neighbor cell information, the terminal selects a carrier for camping on from a cell corresponding to the acquired cell identity.

7. The method of claim 5, wherein, if the acquired cell identity is not included in the received neighbor cell information, the terminal camps on the searched carrier.

8. The method of any of the preceding claims, wherein the selected carrier does not satisfy a camp on condition, the terminal camps on the searched carrier.

9. The method of any of the preceding claims, wherein the terminal comps on the selected carrier using frequency information of the neighbor cell information.

10. A call connection method of a communication system including a base station having a plurality of carriers and a terminal connecting to at least two carriers among the plurality of carriers, the method comprising:

    performing a primary carrier camp on operation to allow the terminal to camp on one carrier among the plurality of carriers using original information of the terminal;
    performing a secondary carrier camp on operation to allow the terminal to camp on one carrier among the plurality of carriers except for the primary carrier that the terminal camps on.

11. The method of claim 10, wherein the performing of the primary carrier camp on operation comprises:

    searching a carrier through neighbor cell information received from the base station;
    acquiring a physical cell identity by performing downlink synchronization of the searched carrier;

selecting a carrier for camping on from a cell corresponding to the acquired physical cell identity using original information of the terminal; and

camping on the selected carrier when the selected carrier satisfies a camp on condition.

12. The method of claim 10 or 11, wherein the performing of the secondary carrier camp on operation comprises determining a secondary carrier of the terminal by considering load for each carrier through the base station.

13. The method of claim 12, wherein the base station transmits system information of the determined secondary carrier to the terminal.

14. The method of claim 13, wherein, if the terminal does not receive the system information of the secondary carrier, a process for receiving the system information of the secondary carrier is performed.

15. The method of claim 13 or 14, wherein, if uplink synchronization about the secondary carrier is required, a random access process is performed.

# Fig. 1

# Fig. 2

```
            ( Start )
                |
                v
   +---------------------------+
   | Search suitable cell      |——S110
   | (carrier)                 |
   +---------------------------+
                |
                v
   +---------------------------+
   | Acquire physical cell id  |——S120
   | from corresponding carrier|
   +---------------------------+
                |
                v         S130
            /¯¯¯¯¯¯¯¯¯¯\
           / Corresponding\      Yes
          < cell id exist in >—————————————————————————+
           \ neighbor cell /                           |
            \ information?/                            |
              \¯¯¯¯¯¯¯¯/                               |
                | No                                   |
                v                                      |
   +---------------------------+                       |
   | Select carrier and acquire|——S140                 |
   | frequency information     |                       |
   +---------------------------+                       |
                |                                      |
                v        S150                          |
            /¯¯¯¯¯¯¯¯¯\                                 |
           /  Camp on   \        No                    |
          <  condition of >——————————————————+         |
           \ selected carrier/                |         |
            \  satisfied? /                   |         |
              \¯¯¯¯¯¯¯/                        |         |
                | Yes    S160                  |         | S165
                v                              v         v
   +---------------------------+       +---------------------------+
   | Camp on selected carrier  |       | Camp on current searched  |
   |                           |       | carrier                   |
   +---------------------------+       +---------------------------+
                |                              |
                v<-----------------------------+
            ( End )
```

# Fig. 3

| UE | |
|---|---|
| CCE-1 | CCE-2 |

① Select Primary Carrier and Receive System Information(CC-a)

② Start Call Connection

③ Random Access Preamble

④ Random Access Response

⑤ Connection Request(The Number of Cce (2))

⑦ Connection Setup (Information for Second Carrier(Ccc-C))

⑧ Receive System Information(CC-c)

⑨ Request Random Access from Upper Layer for Uplink Synchronization

⑫ Complete Call Connection

⑩ Random Access Preamble

⑪ Random Access Response

⑬ Complete Call Connection Setup

| UE | | | |
|---|---|---|---|
| CCE-a | CCE-b | CCE-c | CCE-d |
| System Information (for CC-a) | System Information (for CC-b) | System Information (for CC-c) | System Information (for CC-d) |

⑥ Load Balancing for Second Carrier

EP 2 197 231 A2

# Fig. 4

```
                    ┌─────────┐
                    │  Start  │
                    └────┬────┘
                         │
                         ▼
        ┌────────────────────────────────────┐
        │ Perform connection setup process    │────S210
        │       (primary carrier)             │
        └────────────────┬───────────────────┘
                         │
                         ▼
        ┌────────────────────────────────────┐
        │ Acquire second carrier downlink     │────S220
        │         synchronization             │
        └────────────────┬───────────────────┘
                         │
                         ▼                    S230
                  ╱─────────────╲
                 ╱ Second carrier ╲
                ╱ system information╲    Yes
               ╱  included in        ╲───────────┐
               ╲  connection setup   ╱           │
                ╲     message?      ╱            │
                 ╲                 ╱             │
                  ╲───────┬───────╱              │
                       No │                      │
                          ▼                      │
        ┌────────────────────────────────────┐  │
        │ Receive second carrier system       │──┼──S240
        │         information                 │  │
        └────────────────┬───────────────────┘  │
                         │◄──────────────────────┘
                         │
                         ▼                    S250
                  ╱─────────────╲
                 ╱ Second carrier ╲
                ╱ uplink           ╲    No
               ╱ synchronization    ╲───────────┐
               ╲ acquisition         ╱           │
                ╲   necessary?      ╱            │
                 ╲                 ╱             │
                  ╲───────┬───────╱              │
                      Yes │      S260            │
                          ▼                      │
        ┌────────────────────────────────────┐  │
        │  Perform random access process      │  │
        └────────────────┬───────────────────┘  │
                         │◄──────────────────────┘
                         ▼
                    ┌─────────┐
                    │   End   │
                    └─────────┘
```

11

# Fig. 5

| Information Device/ Group Name | Necessity | The Number of Copies | Meaning Description |
|---|---|---|---|
| · · · · · · · | · · · | · · · | |
| Neighbor Cell Item | Compulsion | 1 to maxcellnter | Neighbor Cell Item |
| Physical Cell Confirmation | Compulsion | | |
| The Number of Carriers | Compulsion | | 1~nCCE |
| Carrier Information | Compulsion | 1 to nCC | |
| Center Frequency of Carrier | Compulsion | | Center Frequency of Single Carrier |
| · · · · · · · · | · · · | · · · | |

EP 2 197 231 A2

# Fig. 6

| Information Device/ Group Name | Necessity | The Number of Copies | Meaning Description |
|---|---|---|---|
| . . . . . . . | . . . | . . . | |
| Ue Confirmation | Compulsion | | Confirm ue including easy competition problem solution by lower layers |
| Call Connection Reason | Compulsion | | Provide call connection reason for RRC connection request provided by upper layers |
| The Number of CCE | Compulsion | | 1~nCCE (nCCE : The number of single carriers) |

EP 2 197 231 A2

Fig. 7

| Information Device/ Group Name | Necessity | The Number of Copies | Meaning Description |
|---|---|---|---|
| . . . . . . . . | . . . | . . . | |
| Exclusive RRC | Compulsion | | Radio source structure for exclusive channel |
| System Information for Second Carrier | Selection | | Partial system information for second carrier (For example, common radio resource structure) |

**EP 2 197 231 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 10200800125868